# FASCICULE DE BREVET EUROPEEN

(11) **EP 2 516 534 B1**
(45) Date de publication et mention de la délivrance du brevet: **27.03.2019**
(21) Numéro de dépôt: 10810860.6
(22) Date de dépôt: 21.12.2010
(51) Int. Cl.: C08K 5/549

(54) **CONDUITE FLEXIBLE SOUS MARINE COMPRENANT UNE COUCHE COMPRENANT UNE RÉSINE POLYMÈRE COMPRENANT UN SILSESQUIOXANE OLIGOMÉRIQUE POLYÉDRIQUE**
FLEXIBLES UNTERWASSERROHR MIT EINER SCHICHT MIT EINEM POLYMERHARZ MIT EINEM POLYEDRISCHEN OLIGOMEREN SILSESQUIOXAN
FLEXIBLE UNDERWATER PIPE INCLUDING A LAYER INCLUDING A POLYMER RESIN INCLUDING A POLYHEDRAL OLIGOMERIC SILSESQUIOXANE

(30) Priorité: 14.06.2010 FR 1054674; 21.12.2009 FR 0959291
(43) Date de publication de la demande: 31.10.2012
(73) Titulaire: Technip France, 92400 Courbevoie (FR)
(72) Inventeur: TRONC, Frédéric, F-76000 Rouen (FR); COUTAREL, Alain, F-76130 Mont Saint Aignan (FR)
(74) Mandataire: Lavoix
(86) Numéro de dépôt international: PCT/FR2010/052846
(87) Numéro de publication internationale: WO 2011/083251

(56) Documents cités:
- EP-A1- 1 362 890
- WO-A2-2008/109863
- US-A1- 2007 027 284

## Description

La présente invention concerne une conduite flexible sous-marine destinée au transport des fluides en eau profonde. Ces fluides sont notamment des gaz ou des liquides, de préférence des hydrocarbures.

Les conduites flexibles de transport des hydrocarbures comportent généralement, de l'extérieur vers l'intérieur de la conduite :
- une gaine polymérique externe pour protéger l'ensemble de la conduite et notamment pour empêcher l'eau de mer de pénétrer dans son épaisseur,
- des nappes d'armures de traction,
- une voûte de pression,
- une gaine polymérique interne d'étanchéité, et
- éventuellement une carcasse métallique.

Si la conduite comprend une carcasse métallique, elle est dite à passage non lisse ("rough bore" en langue anglaise). Si la conduite est exempte de carcasse métallique, elle est dite à passage lisse (" smooth-bore " en langue anglaise). Généralement, pour le transport d'hydrocarbures, une conduite comportant une carcasse est préférée, alors qu'une conduite exempte de carcasse sera adaptée pour le transport d'eau et/ou de vapeur d'eau sous pression.

La carcasse métallique et la voûte de pression sont constituées d'éléments longitudinaux enroulés à pas court, et elles confèrent à la conduite sa résistance aux efforts radiaux tandis que les nappes d'armures de traction sont constituées de fils métalliques enroulés selon des pas longs pour reprendre les efforts axiaux.

La nature, le nombre, le dimensionnement et l'organisation des couches constituant les conduites flexibles sont essentiellement liés à leurs conditions d'utilisation et d'installation. Les conduites peuvent comprendre des couches supplémentaires à celles susmentionnées.

Dans la présente demande, la notion d'enroulement à pas court désigne tout enroulement hélicoïdal selon un angle d'hélice proche de 90°, typiquement compris entre 75° et 90°. La notion d'enroulement à pas long recouvre quant à elle les angles d'hélice inférieurs à 55°, typiquement compris entre 25° et 55° pour les nappes d'armures.

Ces conduites flexibles conviennent notamment au transport de fluides, notamment d'hydrocarbures dans les fonds marins et ce, à de grandes profondeurs. Plus précisément elles sont dites de type non lié ("unbonded" en langue anglaise) et elles sont ainsi décrites dans les documents normatifs publiés par l'American Petroleum Institute (API), API 17J et API RP 17B.

Les conduites flexibles peuvent être utilisées à grande profondeur, typiquement jusqu'à 2500 mètres de profondeur. Elles permettent le transport de fluides, notamment d'hydrocarbures, ayant une température atteignant typiquement 130°C et pouvant même dépasser les 150 °C et une pression interne pouvant atteindre 1000 bars, voire 1500 bars.

Le matériau constitutif de la gaine polymérique interne d'étanchéité doit être stable chimiquement et capable de résister mécaniquement au fluide transporté et à ses caractéristiques (composition, température et pression). Ce matériau doit combiner des caractéristiques de ductilité, de résistance au temps (généralement, la conduite doit avoir une durée de vie d'au moins 20 ans), de résistance mécanique, à la chaleur et à la pression. Le matériau doit notamment être inerte chimiquement vis-à-vis des composés chimiques constituant le fluide transporté.

Des conduites comprenant une gaine polymérique interne d'étanchéité à base de polymère, notamment de polyamide ou de polyéthylène, peuvent notamment être utilisées. Toutefois, les propriétés thermomécaniques des polymères, notamment des polyamides ou des polyéthylènes, dans les conditions d'utilisation précédemment citées (hautes température et pression, acidité élevée et présence d'eau) peuvent être nettement diminuées. En particulier, les polyamides peuvent être dégradés par hydrolyse. De plus, il est difficile d'utiliser des polyéthylènes à des températures supérieures à 65°C. Ainsi, de nombreux travaux ont été rapportés pour tenter d'améliorer ces propriétés, en particulier pour améliorer leurs résistances au fluage et à la tension ou compression. Pour cela, il convient de diminuer la mobilité des chaînes de polymères les unes par rapport aux autres en utilisant des chaînes de polymère plus longues et/ou plus réticulées.

Ainsi, la demande internationale WO2007/078038 décrit une résine thermoplastique, notamment en polyamide, comprenant des nanoparticules d'oxyde métallique dont la surface est recouverte de silanes, permettant la liaison entre le polyamide et les nanoparticules.

La demande internationale WO93/05086 décrit une méthode pour augmenter la masse moléculaire de polyamides par un procédé d'amidation mettant en oeuvre un catalyseur de type acide phosphonique en présence de dioxyde de titane comprenant de l'alumine.

La demande internationale WO2008/113362 décrit une conduite flexible comprenant une couche polymérique, notamment à base de polyamide, comprenant une argile cationique, notamment de type smectite.

La demande internationale WO 03/078134 décrit une conduite flexible comprenant une couche à base de polyéthylène réticulée par un peroxyde.

La demande internationale WO 91/19924 décrit une conduite flexible comprenant une couche à base de polyéthylène réticulée par un silane.

La demande WO 2008/109863 décrit une conduite flexible avec une couche comprenant un caoutchouc de silicone et un promoteur d'adhérence qui consiste d'un siloxane avec un groupement vinylique.

La demande US 2007/0027284 décrit des nanocomposites de silsesquioxanes oligomériques polyédriques et un polymère polyimide; le silsesquioxane est chimiquement lié au polymère polyimide.

Les propriétés mécaniques des polyamides ou polyéthylènes modifiés de ces demandes sont affectées. Néanmoins, ces propriétés doivent encore être améliorées pour permettre le transport de fluides dans les conditions extrêmes mentionnées ci-dessus.

Un des objectifs de la présente invention est donc de fournir une conduite flexible sous marine comprenant une couche à base de polymère présentant des propriétés thermomécaniques améliorées permettant son utilisation pour le transport de fluides, tels que des hydrocarbures, notamment à haute pression et haute température.

A cet effet, selon un premier objet, l'invention a pour objet une conduite flexible sous marine destinée au transport de fluides, notamment d'hydrocarbures, comprenant au moins une couche comprenant une résine polymère comprenant au moins un silsesquioxane oligomérique polyédrique lié chimiquement au polymère.

Les silsesquioxanes oligomériques polyédriques (Polyhedral Oligomeric silsesquioxane POSS) selon l'invention, ci-après POSS, peuvent être des molécules de dimensions nanométriques de formule (RSiO_{1,5})ₓ où x représente un nombre entier supérieur ou égal à 6 et inférieur ou égal à 12, x représentant le degré de polymérisation, et où R représente un substituant, étant entendu que les groupes R de chaque groupe RSiO_{1,5} peuvent être identiques ou différents les uns des autres, au moins un groupement R du POSS étant susceptible de former une liaison chimique avec ledit polymère.

Les POSS ont une structure sous forme de « cage » comportant des atomes de silicium et d'oxygène, et où chaque atome de silicium porte un substituant R.

Lorsqu'au moins un des groupements R est un substituant organique, les POSS sont des entités hybrides organique/inorganique.

Les groupements R peuvent être de nature très variée. Chaque groupement R peut indépendamment des autres R être :
- inorganique, par exemple un halogène, -SH, -OH ou -NH₂, ou
- organique, par exemple :
- un groupe -OSi(R₇)(R₈)(R₉), où R₇, R₈ et R₉ représentent indépendamment OH, un alkyle, un alcoxyle ou un groupe 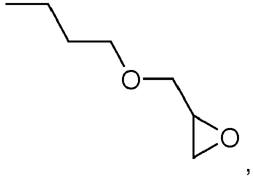
- un groupe -OR₁₇, où R₁₇ représentent H ou un alkyle,
- une chaîne hydrocarbonée linéaire, ramifiée ou cyclique, saturée, insaturée (notamment un groupe vinylique) ou aromatique, éventuellement substituée par un ou plusieurs groupes, notamment choisis parmi un halogène ou un groupe -OCOCI, -COCI, -SO₂Cl, -COOR₁, -COR₁, -CR₁R₂Cl, -OR₁, -OSi(R₇)(R₈)(R₉), -SR₁, -NR₁R₂, -NR₁COR₂, -COR₁NR₂, -NR₁-CO-NR₂R₃, -O-CO-NR₁, -NR₁-CO-OR₂, -CN, -NO₂, -NCO, 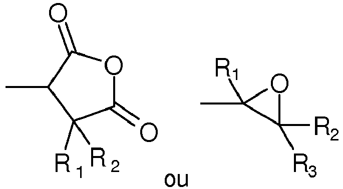 où R₇, R₈ et R₉ sont tels que définis ci-dessus et R₁, R₂ et R₃ représentent indépendamment H ou une chaîne hydrocarbonée linéaire, ramifiée ou cyclique, saturée, insaturée ou aromatique, elle même éventuellement substituée par un ou plusieurs des groupes choisis parmi un halogène ou un groupe -OCOCI, -COCI, -SO₂Cl, -COOR₄, -COR₄, -CR₄R₅Cl, -OR₄, -SR₄, -NR₄R₅, NR₄COR₅, -COR₄NR₅, -NR₄-CO-NR₅R₆, -O-CO-NR₄, -NR₄-CO-OR₅, -CN, -NO₂, -NCO, 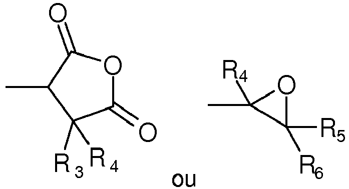 où R₄, R₅ et R₆ représentent indépendamment H ou une chaîne hydrocarbonée linéaire, ramifiée ou cyclique, saturée, insaturée ou aromatique,
étant entendu qu'au moins un des R du POSS est susceptible de former une liaison chimique avec le polymère.

Au sens de la présente demande, un halogène est choisi parmi un fluor, un brome, un iode et un chlore.

Une chaîne hydrocarbonée comprend de préférence de 1 à 10 atomes de carbone, notamment de 2 à 6 atomes de carbone. Les chaînes hydrocarbonées préférées sont les groupes alkyle (ayant de préférence de 1 à 10 atomes de carbone, en particulier de 2 à 6), alcényle (ayant de préférence de 2 à 10 atomes de carbone, en particulier de 2 à 6), aryle (ayant de préférence de 6 à 10 atomes de carbone), arylalkyle (ayant de préférence de 7 à 10 atomes de carbone) ou alkylaryle (ayant de préférence de 7 à 10 atomes de carbone). Le groupe vinylique est le groupe alcényle préféré. Le groupe phényle est l'aryle préféré.

Les groupes alkyle ont de préférence de 1 à 10 atomes de carbone, en particulier de 2 à 6. Un groupe alcoxyle est un groupe -O-alkyle.

Le schéma suivant illustre quatre exemples de structures de POSS convenant à l'invention.

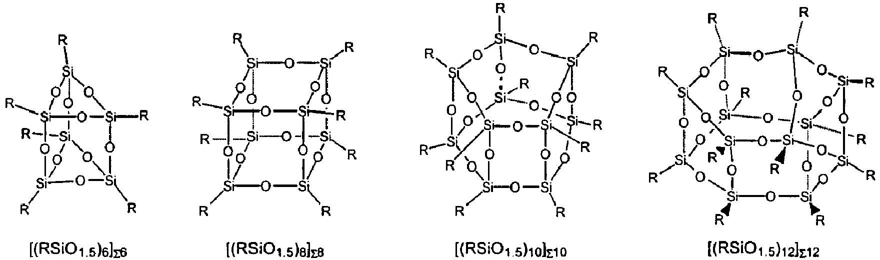

La définition de POSS au sens de la demande inclut également les POSS de formule [(RSiO_{1,5})_{x'}(XRSiO_{1,0})_{x"}], où :
- R est tel que défini ci-dessus,
- x' et x" représentent indépendamment l'un de l'autre un nombre entier, tel que la somme de x' et de x" soit supérieure ou égale à 6 et inférieure ou égale à 12, et
- X représente un substituant du silicium, les groupes X de chaque groupe XRSiO_{1,0} pouvant être identiques ou différents les uns des autres et identiques ou différents des substituants R,
étant entendu qu'au moins un des R ou un des X est susceptible de former une liaison chimique avec le polymère.

Ces composés, illustrés dans le schéma suivant, correspondent aux POSS dans lesquels certaines des fonctions Si-O-Si sont rompues (cage partiellement ouverte) comme illustré sur le schéma ci-dessous. Les atomes de silicium situés au niveau de l'ouverture de la cage sont substitués par des groupements R et X. Les atomes de silicium de la cage sont substitués par des groupements R.

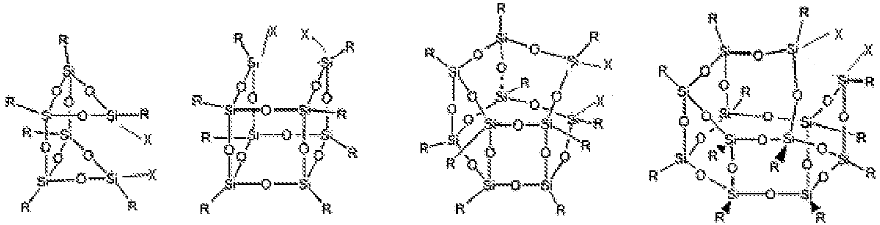

Par exemple, le schéma suivant représente des POSS dans lesquels une fonction Si-O-Si est sous forme hydrolysée (X représente OH).

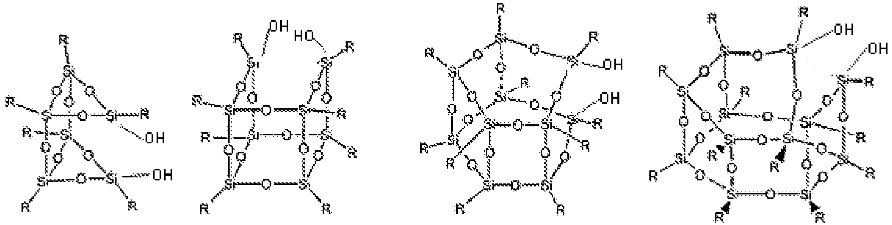

Typiquement, chaque groupement X peut être, indépendamment des autres groupements X et des groupements R, un groupement :
- inorganique, par exemple un halogène, -SH, -OH ou -NH₂, ou
- organique, par exemple :
   - un groupe -OSi(R₇)(R₈)(R₉), où R₇, R₈ et R₉ représentent indépendamment OH, un alkyle, un alcoxyle ou un groupe 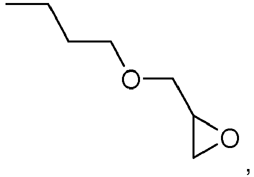
   - un groupe-OR₁₇, où R₁₇ représentent H ou un alkyle,
   - une chaîne hydrocarbonée linéaire, ramifiée ou cyclique, saturée, insaturée (notamment un groupe vinylique) ou aromatique, éventuellement substituée par un ou plusieurs groupes, notamment choisis parmi un halogène ou un groupe - OCOCl, -COCl, -SO₂Cl, -COOR₁, -COR₁, -CR₁R₂Cl, -OR₁, -OSi(R₇)(R₈)(R₉), -SR₁, -NR₁R₂, -NR₁COR₂, -COR₁NR₂, -NR₁-CO-NR₂R₃, -O-CO-NR₁, -NR₁-CO-OR₂, -CN, -NO₂, -NCO, 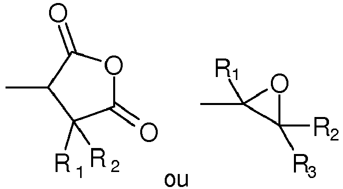 où R₇, R₈ et R₉ sont tels que définis ci-dessus et R₁, R₂ et R₃ représentent indépendamment H ou une chaîne hydrocarbonée linéaire, ramifiée ou cyclique, saturée, insaturée ou aromatique, elle même éventuellement substituée par un ou plusieurs des groupes choisis parmi un halogène ou un groupe -OCOCI, -COCI, -SO₂Cl, -COOR₄, -COR₄, -CR₄R₅Cl, -OR₄, -SR₄, -NR₄R₅, NR₄COR₅, -COR₄NR₅, -NR₄-CO-NR₅R₆, -O-CO-NR₄, -NR₄-CO-OR₅, -CN, -NO₂, -NCO, 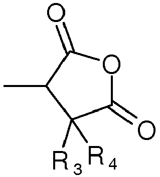 ou 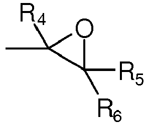 où R₄, R₅ et R₆ représentent indépendamment H ou une chaîne hydrocarbonée linéaire, ramifiée ou cyclique, saturée, insaturée ou aromatique.

Les inventeurs ont découvert que des silsesquioxanes oligomériques polyédriques liés chimiquement à un polymère permettent de diminuer la mobilité des chaînes de polymère les unes par rapport aux autres et donc d'améliorer les propriétés thermomécaniques du polymère, en particulier d'améliorer sa résistance au fluage et à la tension ou compression.

Par un silsesquioxane oligomérique polyédrique « lié chimiquement » au polymère, on entend que le silsesquioxane oligomérique polyédrique comprend au moins un groupement susceptible de former une liaison chimique avec le polymère. On entend par « groupement susceptible de former une liaison chimique » tout atome, fonction susceptible de former une liaison chimique ou tout groupe porteur d'un tel atome ou d'une telle fonction. La liaison chimique est par exemple une liaison covalente, ionique ou une liaison hydrogène. De préférence, le au moins un silsesquioxane oligomérique polyédrique est lié au polymère par au moins une liaison covalente et/ou hydrogène.

Au moins un des groupements R ou X tels que définis ci-dessus du POSS est donc lié chimiquement au polymère.

Dans un premier mode de réalisation, la liaison chimique entre le polymère et le POSS dans la couche de la conduite est une liaison covalente. Cette liaison chimique peut notamment être une liaison de type ester, amide, amine, éther, thioéther, urée, imine, imide, sulfonamide, carbamate, phosphate, siloxane (Si-O-Si), silane (Si-C) ou carbone-carbone. Ce mode de réalisation est particulièrement préféré car les liaisons covalentes sont généralement les liaisons chimiques les plus stables.

Dans un deuxième mode de réalisation, la liaison chimique entre le polymère et le POSS dans la couche de la conduite est une liaison hydrogène. Cette liaison chimique existe en présence d'au moins un donneur de liaison hydrogène et au moins un accepteur de liaison hydrogène, l'un étant sur le POSS et l'autre étant sur le polymère. L'accepteur est notamment un atome de fluor, d'azote ou d'oxygène et le donneur est un H acide, typiquement tel qu'un H porté par une amine ou un alcool, mais aussi un amide, une urée, un carbamate...

Dans un troisième mode de réalisation, le polymère et le POSS de la couche de la conduite sont liés à la fois par une liaison covalente et une liaison hydrogène.

Le polymère de la couche de la conduite flexible est un polymère capable de se lier chimiquement au POSS, typiquement par des liaisons hydrogène et/ou covalentes. Le polymère peut comporter dans son squelette des groupes capables de se lier chimiquement au POSS. Il peut également comporter des chaînes latérales fonctionnelles. Des chaînes latérales fonctionnelles sont, par exemple, des chaînes latérales porteuses de groupes COOH, NH₂, OH, époxyde, nitrile, anhydride ou trialcoxysilane. Le polymère est de préférence un polymère organique (c'est-à-dire comportant des atomes de carbone), et en particulier dont le squelette est organique.

Dans un premier mode de réalisation, le polymère de la couche de la conduite flexible est un polyamide comportant éventuellement des chaînes latérales fonctionnelles, notamment telles que définies ci-dessus. Les polyamides sont avantageux car ils peuvent être utilisés à de hautes températures, généralement au dessus de 100 °C. Le polyamide de la couche de la conduite flexible sous marine peut être un homopolyamide ou un copolyamide, tel que, par exemple, du polyamide 6, du polyamide 4.6, du polyamide 6.6, du polyamide 11, du polyamide 12, du polyamide 12.12, du polyamide 10.12, du polyamide 6.10, du polyamide 6.12, du polyamide 6.9, du polyamide 9.9, du polyamide 9T, du polyamide 12T, du polyamide 10T, du polyamide 12I, du polyamide 12T, du polyamide 12T.12, du polyamide 10T.12, du polyamide 12T.106, du polyamide 10T.106, du polyamide 6.66, du polyamide 6.612, du polyamide 6.66.610, du polyamide 6.66.12, du polyamide 6.6T, du polyamide 6T.6, du polyamide 6T.12, du polyamide 6T.6I, du polyamide 6I.6T, du polyamide 6.6I, du polyamide 6T.66, du polyamide 6T.66.12, du polyamide 12.MACMI, du polyamide 66.6I.6T, du polyamide MXD6.6, MXD10, un polyphtalamide, un polyarylamide, un polyesteramide, un polyétheresteramide, un polyétheramide ou leurs mélanges.

De préférence, le polyamide est choisi parmi le polyamide 11, le polyamide 12, le polyamide 6.12 et un polyphtalamide.

Lorsque le polymère de la couche de la conduite flexible est un polyamide, le polyamide et le POSS de la couche de la conduite peuvent être liés par liaison covalente et/ou liaison hydrogène.

Dans un second mode de réalisation, le polymère de la couche de la conduite flexible est un polyéthylène comportant éventuellement des chaînes latérales fonctionnelles. Les polymères polyéthylène sont intéressants car ils ne se dégradent pas par hydrolyse et sont peu coûteux. Des chaînes latérales fonctionnelles sont, par exemple, des chaînes latérales porteuses de groupes COOH, NH₂, OH, époxyde, nitrile, anhydride ou trialcoxysilane, de préférence trialcoxysilane, notamment des chaînes latérales fonctionnelles porteuses de groupes de formule -Si-(OR₁₀)(OR_{N})(OR₁₂), où R₁₀, R₁₁ et R₁₂ sont indépendamment des groupes alkyle, de préférence n-propyle, isopropyle, éthyle ou méthyle, de manière particulièrement préférée méthyle. Par exemple, le polyéthylène peut comprendre des chaînes latérales de formule -CH₂-CH₂-Si-(OR₁₀)(OR₁₁)(OR₁₂), où R₁₀, R₁₁ et R₁₂ sont tels que définis ci-dessus, en particulier des chaînes latérales de formule -CH₂-CH₂-Si-(OMe)₃, qui sont particulièrement préférés car les fonctions Si-OMe sont facilement hydrolysables en fonctions silanol Si-OH.

Les polymères polyéthylène comportant des chaînes latérales fonctionnelles sont soit commerciaux, soit peuvent être préparés par des techniques connues de l'homme du métier. Par exemple, les polymères polyéthylène comportant des chaînes latérales de formule -CH₂-CH₂-Si-(OR₁₀)(OR₁₁)(OR₁₂) peuvent être préparés par réaction entre du polyéthylène et le dérivé vinylsilane de formule CH=CH-Si-(OR₁₀)(OR₁₁)(OR₁₂) en présence de peroxyde (procédé Sioplast).

Une conduite flexible comprenant une couche comportant une résine polyéthylène comprenant au moins un POSS lié chimiquement au polyéthylène peut avantageusement être utilisée à des températures plus élevées qu'une conduite flexible comprenant une couche comportant une résine polyéthylène, et en particulier à des températures compatibles à une utilisation pour le transport d'hydrocarbures.

Lorsque le polymère de la couche de la conduite flexible est un polyéthylène comportant éventuellement des chaînes latérales fonctionnelles, le polyéthylène et le POSS de la couche de la conduite sont généralement liés par liaison covalente.

Dans un troisième mode de réalisation, le polymère de la couche de la conduite flexible est un homopolymère ou copolymère de polyfluorure de vinylidène comportant éventuellement des chaînes latérales fonctionnelles. Un homopolymère ou copolymère de polyfluorure de vinylidène est notamment porteur de fonctions fluorure avec lesquelles le POSS est susceptible de former des liaisons hydrogène.

La couche comprenant une résine polymère comprenant au moins un POSS lié chimiquement au polymère de la conduite flexible sous marine peut également comprendre des additifs, tels que : des antioxydants, des plastifiants et toutes autres charges comme par exemple du noir de carbone.

La couche comprenant au moins une couche comprenant une résine polymère comprenant au moins un POSS lié chimiquement au polymère peut notamment être la gaine polymérique interne d'étanchéité dans une conduite flexible sous marine telle que définie ci-dessus, mais elle peut aussi être une couche intermédiaire située entre deux autres couches.

Dans un mode de réalisation, la conduite flexible sous marine comprend en outre les couches suivantes :
- une gaine polymérique externe,
- au moins une nappe d'armure de traction,
- éventuellement une voûte de pression, et
- éventuellement une carcasse métallique.

Selon un deuxième objet, l'invention concerne un procédé de préparation de la conduite flexible sous marine précitée, comprenant les étapes suivantes :
a) formation d'une résine polymère comprenant au moins un silsesquioxane oligomérique polyédrique comprenant le mélange d'un polymère et d'au moins un silsesquioxane oligomérique polyédrique dont au moins un des atomes de silicium est substitué par un groupement susceptible de former une liaison hydrogène et/ou covalente avec ledit polymère,
b) extrusion pour former une couche comprenant ladite résine,
c) assemblage de la couche obtenue à l'étape b) avec au moins une autre couche.

Le procédé comprend généralement une étape ultérieure d) de réticulation de l'assemblage obtenu lors de l'étape c). Cette réticulation est généralement réalisée en mettant le dit assemblage en présence d'eau (ou d'humidité) à des températures élevées, notamment de 85 à 99 °C, de préférence de 95 à 98°C, par exemple par immersion dans l'eau chaude ou par circulation d'eau chaude. La durée de l'étape d) de réticulation est variable, et dépend notamment de l'épaisseur de la couche comprenant la résine polymère comprenant le POSS.

Le polymère mis en oeuvre dans le procédé est tel que défini ci-dessus.

Ledit groupement susceptible de former une liaison hydrogène et/ou covalente avec ledit polymère est de préférence choisi parmi les R et/ou X définis ci-avant et susceptibles de former une liaison hydrogène et/ou covalente avec ledit polymère, notamment tels que le(s)dit(s) R et/ou X est(sont) choisi(s) parmi un halogène, -SH, -OH, -NH₂, un groupe -OSi(R₇)(R₈)(R₉), où R₇, R₈ et R₉ représentent indépendamment OH, un alkyle, un alcoxyle ou un groupe 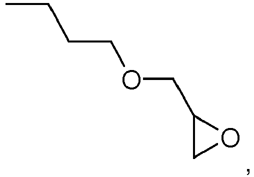 un groupe-OR₁₇, où R₁₇ représentent H ou un alkyle, une chaîne hydrocarbonée insaturée (notamment un groupe vinylique) ou une chaîne hydrocarbonée linéaire, ramifiée ou cyclique, saturée, insaturée ou aromatique, substituée par un ou plusieurs groupes choisis parmi un halogène ou un groupe -OCOCI, -COCI, -SO₂Cl, -COOR₁, -COR₁, -CR₁R₂Cl, -OR₁, -OSi(R₇)(R₈)(R₉),-SR₁, -NR₁R₂, -NR₁COR₂, -COR₁NR₂, -NR₁-CO-NR₂R₃, -O-CO-NR₁, -NR₁-CO-OR₂, -CN,-NO₂, -NCO, 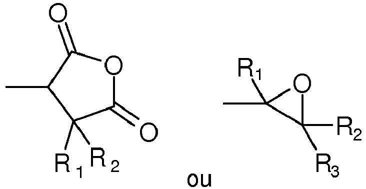 où R₇, R₈ et R₉ représentent indépendamment H ou un alkyle et R₁, R₂ et R₃ représentent indépendamment H ou une chaîne hydrocarbonée linéaire, ramifiée ou cyclique, saturée, insaturée ou aromatique, elle même éventuellement substituée par un ou plusieurs des groupes choisis parmi un halogène ou un groupe -COCI, -OCOCI, -SO₂Cl, -COOR₄, -COR₄, -CR₄R₅Cl, -OR₄, -SR₄, -NR₄R₅, NR₄COR₅, -COR₄NR₅, -NR₄-CO-NR₅R₆, -O-CO-NR₄, -NR₄-CO-OR₅, -CN, -NO₂, -NCO, 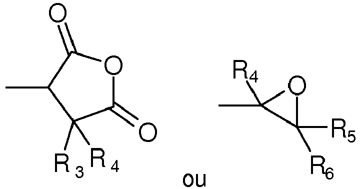 où R₄, R₅ et R₆ représentent indépendamment H ou une chaîne hydrocarbonée linéaire, ramifiée ou cyclique, saturée, insaturée ou aromatique.

Dans un premier mode de réalisation du procédé, le(s)dit(s) groupement(s) R et/ou X du POSS susceptible(s) de former une liaison covalente avec les fonctions du polymère est(sont) choisi(s) parmi un halogène, -OH, -COOH, -NH₂, -SH, un groupe -OSi(R₇)(R₈)(R₉), -OR₁₇, où R₇, R₈, R₉ et R₁₇ sont tels que définis ci-dessus ou une chaîne hydrocarbonée linéaire, ramifiée ou cyclique, saturée, insaturée ou aromatique, substituée par un ou plusieurs groupes choisis parmi un halogène ou un groupe -COCI, -OCOCI, -SO₂Cl, -COOH, -CR₁R₂Cl, -OH, -SH, -NR₁H, -CN, -NCO, 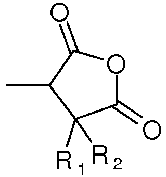 ou 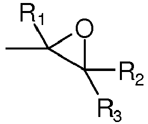 où R₁, R₂ et R₃ sont tels que définis ci-dessus.

Le(s) R et/ou X susceptible(s) de former une liaison hydrogène et/ou covalente avec ledit polymère particulièrement préféré(s) est(sont) choisi(s) parmi :
- un groupe -OH, -COOH ou NH₂, de préférence -OH,
- un groupe -OR₁₇ où R₁₇ représente un alkyle, de préférence un méthyle, car le groupe -Si-OMe (le silicium provenant de la cage du POSS) est avantageusement facilement hydrolysable en fonction silanol Si-OH,
- un groupe -OSi(R₇)(R₈)(R₉), de préférence un groupe 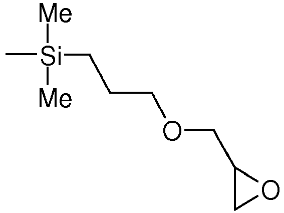 ou un groupe -OSi(OMe)₃, dont les fonctions Si-OMe sont avantageusement facilement hydrolysables en fonction silanol Si-OH
- un groupe vinylique -CH=CH₂,
- un groupe de formule -(CH₂)₃-NH-(CO)-CH=CH-COOH.

Ainsi, dans ce premier mode de réalisation, lors de l'étape a), au moins une liaison covalente est formée entre le polymère et le POSS.

A titre illustratif, un substituant du POSS porteur d'une fonction :
- halogène peut former une liaison amine avec une fonction amine du polymère (par substitution nucléophile), notamment lorsque le polymère est un polyamide,
- alcool peut former une liaison ester avec une fonction acide carboxylique du polymère, notamment lorsque le polymère est un polyamide,
- thiol peut former une liaison thioester avec une fonction acide carboxylique du polymère, notamment lorsque le polymère est un polyamide,
- époxyde peut former une liaison ester avec une fonction acide carboxylique du polymère et/ou une liaison amine avec une fonction amine du polymère, notamment lorsque le polymère est un polyamide,
- amine peut former une liaison amide avec une fonction acide carboxylique du polymère, notamment lorsque le polymère est un polyamide,
- acide carboxylique, chlorure d'acyle ou anhydride peut former une liaison amide avec une fonction amine du polymère, notamment lorsque le polymère est un polyamide,
- isocyanate peut former une liaison urée avec une fonction amine du polymère, notamment lorsque le polymère est un polyamide,
- chloroformiate peut former une liaison carbamate avec une fonction amine du polymère, notamment lorsque le polymère est un polyamide,
- chlorure de sulfonyle peut former une liaison sulfonamide avec la fonction amine du polymère, notamment lorsque le polymère est un polyamide,
- hydroxyle peut former une liaison siloxane avec un groupement trialcoxysilane du polymère, notamment lorsque le polymère est un polyéthylène comportant des chaînes latérales porteuses de groupes trialcoxysilane,
- alcoxyle peut former une liaison siloxane avec un groupement trialcoxysilane du polymère, notamment lorsque le polymère est un polyéthylène comportant des chaînes latérales porteuses de groupes trialcoxysilane,
- -OSi(R₇)(R₈)(R₉) où R₇, R₈ et R₉ représentent indépendamment OH ou un alcoxyle peut former une liaison siloxane avec un groupe trialcoxysilane du polymère, notamment lorsque le polymère est un polyéthylène comportant des chaînes latérales porteuses de groupes ou trialcoxysilane.
- vinylique peut former une liaison carbone-carbone avec un polyéthylène.

Les POSS de formules (I), (II), (III), (IV), (V), (VII), (VIII), (IX), (X), (XI), (XII), (XIII) et (XIV) suivantes peuvent par exemple être mis en oeuvre lors de l'étape a) du premier mode de réalisation : 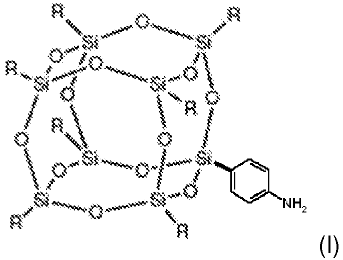 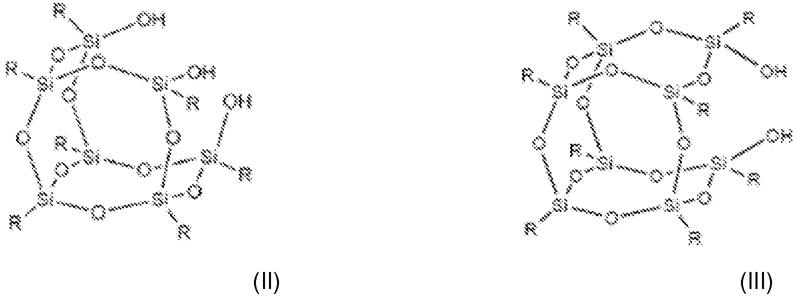 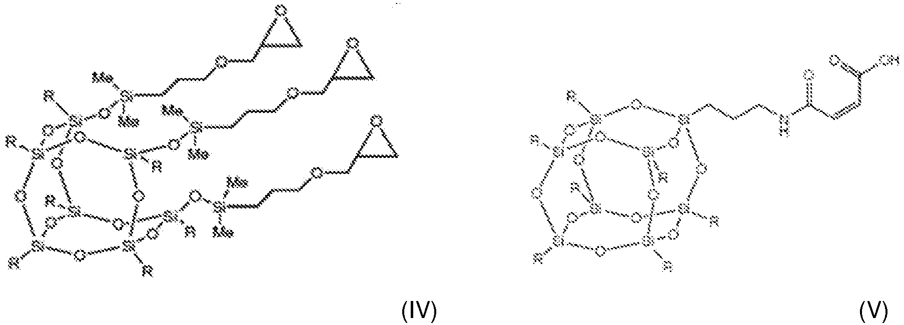 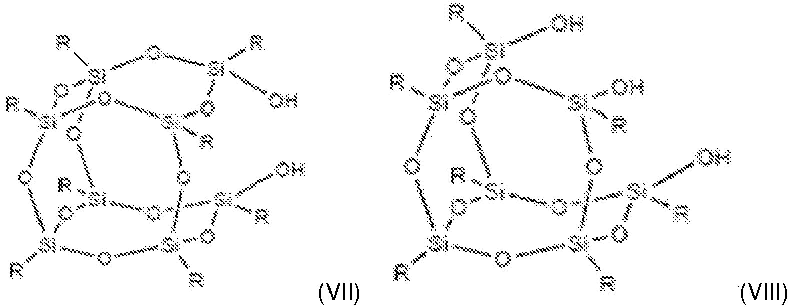 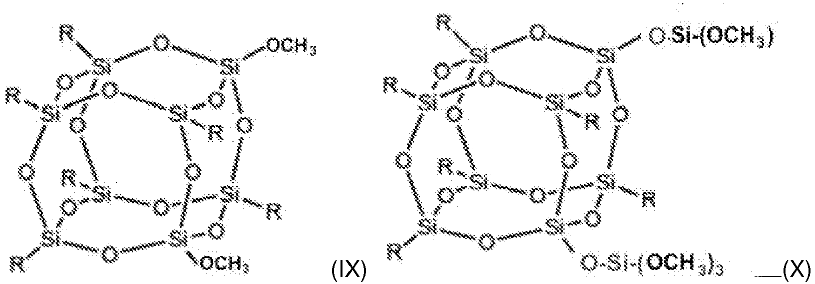 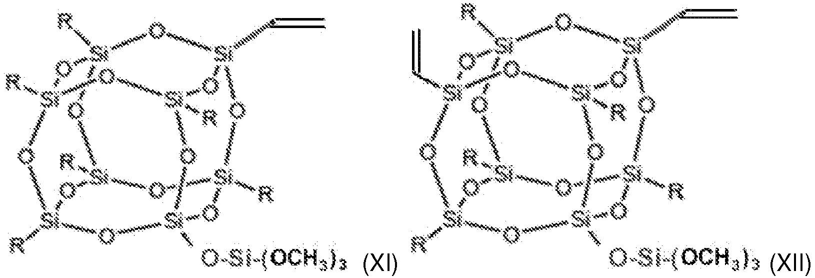 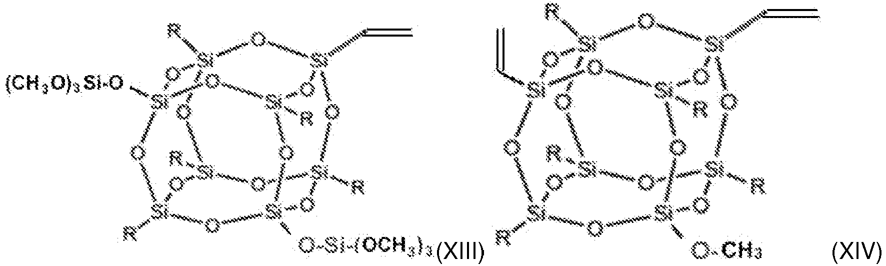 dans lesquelles R représente une chaîne hydrocarbonée linéaire, ramifiée ou cyclique, saturée, insaturée ou aromatique ou un groupement tel que défini pour R et/ou X dans le premier mode de réalisation du procédé.

De préférence, dans la formule (I) susmentionnée, R représente 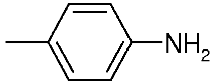 et dans les formules (II), (III) (IV) et (V) susmentionnées, R représente un alkyle, par exemple un groupe isobutyle. Ces POSS sont avantageusement disponibles commercialement.

Les composés de formule (VII) et (VIII) sont disponibles commercialement.

De préférence, lorsque le polymère est un polyamide comportant éventuellement des chaînes latérales, les POSS de formules (I), (II), (III), (IV) ou (V) sont mis en oeuvre lors de l'étape a).

De préférence, lorsque le polymère est un polyéthylène comportant des chaînes latérales porteuses de groupes trialcoxysilane, notamment de comportant un groupe -Si-(OR₁₀)(OR₁₁)(OR₁₂), où R₁₀, R₁₁ et R₁₂ sont tels que définis ci-dessus, en particulier des chaînes latérales de formule -CH₂-CH₂-Si-(OR₁₀)(OR₁₁)(OR₁₂), où R₁₀, R₁₁ et R₁₂ sont tels que définis ci-dessus, les POSS de formules (VII), (VIII), (IX) ou (X) sont mis en oeuvre lors de l'étape a).

De préférence, lorsque le polymère est un polyéthylène, les POSS de formules (XI), (XII), (XIII) ou (XIV) sont mis en oeuvre lors de l'étape a).

Des POSS dont au moins un des atomes de silicium est substitué par un substituant porteur d'un groupement susceptible de former une liaison covalente avec un polymère, et en particulier porteur d'une des groupes précités, peuvent notamment être préparés en suivant les procédés décrits dans la demande internationale WO 01/10871.

Le mélange de l'étape a) peut notamment être réalisé par mélange à l'état fondu du polymère (« melt mixing » en anglais), par compoundage, par extrusion, par extrusion réactive (c'est-à-dire en réalisant les étapes a et b simultanément). Excepté lorsque l'étape a) est réalisée par extrusion réactive, le mélange de l'étape a) peut être utilisé soit en mélange maître soit en matrice principale pour former la couche comprenant la résine polymère.

Généralement, dans l'étape a) du procédé lorsque le mélange du polymère et du POSS constitue la matrice principale, 1 à 10% en poids, de préférence 1 à 5% en poids, de POSS sont utilisés par rapport au poids total du mélange. Lorsque le mélange du polymère et du POSS est utilisé comme mélange maître, le pourcentage massique du POSS dans la résine polymère peut atteindre 30% voire 50%.

Lors de l'étape a) du procédé, des additifs peuvent être ajoutés, en particulier ceux susmentionnés.

Dans ce premier mode de réalisation, le procédé peut comprendre une étape de couplage chimique pour former une liaison covalente entre ledit groupement et les fonctions du polymère, par exemple une hydrolyse ou une réaction radicalaire.

Cette étape de couplage chimique peut par exemple être une hydrolyse, notamment une hydrolyse acide. Par exemple :
- si le polymère est un polyéthylène comportant des chaînes latérales porteuses de groupe trialcoxysilane, de préférence de formule -CH₂-CH₂-Si-(OR₁₀)(OR₁₁)(OR₁₂), une hydrolyse permet d'hydrolyser le groupe trialcoxysilane en groupe silanol, apte à se lier à au moins un groupe hydroxyle porté par un POSS par formation d'une liaison siloxane (Si-O-Si),
- si le polymère est un polyéthylène comportant des chaînes latérales porteuses de groupe trialcoxysilane, de préférence de formule -CH₂-CH₂-Si-(OR₁₀)(OR₁₁)(OR₁₂), une hydrolyse permet d'hydrolyser le groupe trialcoxysilane en groupe silanol et si le POSS comporte au moins un groupe trialcoxysilane hydrolysable en groupe silanol, les groupes silanol ainsi formées sur le POSS et le polymère peuvent se condenser entre-elles par formation d'une liaison siloxane,
- si le polymère est un polyéthylène comportant des chaînes latérales porteuses de groupe trialcoxysilane, de préférence de formule -CH₂-CH₂-Si-(OR₁₀)(OR₁₁)(OR₁₂), une hydrolyse permet d'hydrolyser le groupe trialcoxysilane en groupe silanol et si le POSS comporte au moins un groupe alcoxyle hydrolysable en groupe silanol (le groupe alcoxyle étant porté par un atome de silicium de la cage du POSS), les groupes silanol sur le POSS et le polymère peuvent se condenser entre-eux par formation d'une liaison siloxane.

Le polymère peut également être préparé lors de l'étape a). Par exemple, lorsque le polymère est un polymère polyéthylène comportant des chaînes latérales de formule -CH₂-CH₂-Si-(OR₁₀)(OR₁₁)(OR₁₂) où R₁₀, R₁₁ et R₁₂ sont tels que définis ci-dessus, l'étape a) peut comporter les étapes suivantes :
a₁) fondre un polymère polyéthylène,
a₂) ajouter un dérivé vinylsilane de formule CH=CH-Si-(OR₁₀)(OR₁₁)(OR₁₂), un initiateur peroxyde et au moins un silsesquioxane oligomérique polyédrique dont au moins un des atomes de silicium est substitué par un groupe hydroxyle, trialcoxysilane ou alcoxyle pour obtenir un polyéthylène comportant des chaînes latérales fonctionnelles,
a₃) mélanger avec du polyéthylène, un catalyseur de la réaction de réticulation, un antioxydant et un stabilisateur,
étant entendu que les étapes a₂, a₃ et b) peuvent être effectuées simultanément.

L'initiateur peroxyde peut notamment être du péroxyde de dicumyl ou du 1,1-(t-butylpéroxy) 3,3,5-trimethylcyclohexane (Lupersol L231).

Le catalyseur de la réaction de réticulation peut notamment être du laurate de dibutyl étain (DBTL) ou du laurate de dioctyl étain (DOTL).

L'antioxydant peut notamment être un composé phénolique encombré, tel que les composés Irganox® (Ciba-BASF) ou Hostanox® (Clariant).

Le stabilisateur peut notamment être un photostabilisant amine encombrée (HALS - « hindered amine light stabilizer »), tel que chimassorb®, Tinuvin® ou irgastab® (Ciba-BASF).

Le mélange de polyéthylène, du catalyseur de la réaction de réticulation, de l'antioxydant et du stabilisateur est un mélange maître pour le polyéthylène comportant des chaînes latérales de formule -CH₂-CH₂-Si-(OR₁₀)(OR₁₁)(OR₁₂).

Les POSS porteurs d'au moins un groupe hydroxyle, trialcoxysilane ou alcoxyle sont ajoutés lors de l'étape a2), simultanément ou séparément au dérivé vinylsilane. En effet, on préfère généralement éviter l'ajout de POSS lors de l'étape a3) pour éviter une réaction chimique entre le catalyseur de la réaction de réticulation et le POSS et donc leurs dégradations.

Les étapes a₁), a₂) et a₃) sont alors suivies de l'étape b) (extrusion), c) (assemblage avec d'autres couches) et d) (réticulation) telles que définies ci-dessus.

L'étape d) comprend alors l'étape d'hydrolyse susmentionnée permettant la formation des liaisons siloxane.

L'étape de couplage chimique peut également être une réaction radicalaire. Par exemple, si le polymère est un polyéthylène et que le POSS est porteur d'au moins un groupe vinylique, le POSS peut être greffé au polyéthylène par réaction radicalaire et formation de liaisons carbone-carbone.

L'étape a) comprend alors les étapes a₁, a_{2bis} et a_{3bis} et le procédé comprend les étapes suivantes :
a₁) fondre un polymère polyéthylène,
a_{2bis}) ajouter au polymère polyéthylène fondu un initiateur peroxyde et au moins un silsesquioxane oligomérique polyédrique dont au moins un des atomes de silicium est substitué par un groupe hydroxyle, trialcoxysilane ou alcoxyle pour obtenir un prémélange,
a_{3bis}) mélanger avec du polyéthylène, un catalyseur de la réaction de réticulation, un antioxydant et un stabilisateur,
b) extrusion pour former une couche comprenant ladite résine,
c) assemblage de la couche obtenue à l'étape b) avec au moins une autre couche,
d) réticulation de l'assemblage obtenu à la fin de l'étape c),
étant entendu que les étapes a_{2bis}, a_{3bis} et b) peuvent être effectuées simultanément. Par exemple, le POSS peut être ajouté lors de l'extrusion par une alimentation latérale (« side-feeder ») sur l'extrudeuse.

L'initiateur peroxyde, le catalyseur de la réaction de réticulation, l'antioxydant, le stabilisateur peuvent notamment être ceux définis ci-dessus.

La réticulation de l'étape d) est généralement réalisée dans les mêmes conditions que définies ci-dessus. L'étape d) comprend alors l'étape de réaction radicalaire susmentionnée permettant la formation des liaisons carbone-carbone entre le groupe vinylique du POSS et le polyéthylène. Si le POSS comprend, en plus de la fonction vinylique, un groupe -OSi(R₇)(R₈)(R₉), l'étape d) comprend en plus une étape d'hydrolyse permettant la formation de liaisons siloxane.

Un procédé différent peut être mis en oeuvre lors que le polymère est un polyéthylène et que le POSS est porteur d'au moins un groupe vinylique, dans lequel le polymère polyéthylène est préparé lors du procédé. Le procédé comprend alors une étape de polymérisation d'éthylène et POSS est porteur d'au moins un groupe vinylique. Ce procédé est toutefois plus complexe à mettre en oeuvre que le procédé comprenant les étapes a₁), a_{2bis}), a_{3bis}), b), c) et d) telles que définies ci-dessus.

Les modes de réalisations suivants sont préférés lorsque le polymère est du polyéthylène :
- le POSS est porteur d'au moins un groupe vinylique, notamment de deux groupes vinylique,
- le POSS est porteur d'au moins un groupe vinylique et d'un groupe siloxane (de préférence de formule -OSi(R₇)(R₈)(R₉) où R₇, R₈ et R₉ sont tels que définis ci-dessus), notamment porteur de deux groupes vinylique et d'un groupe siloxane ou porteur d'un groupe vinylique et de deux groupes siloxane,
- le POSS est porteur d'au moins un groupe vinylique et d'un groupe alcoxyle, notamment deux groupes vinylique et d'un groupe alcoxyle.

L'étape de couplage chimique peut être catalysée, notamment par la chaleur, des radiations et/ou un catalyseur.

Par exemple, si le polymère est porteur d'une fonction acide carboxylique, la réaction d'estérification entre la fonction hydroxyle d'un POSS dont au moins un des atomes de silicium est substitué par un substituant porteur d'un groupe hydroxyle et la fonction acide carboxylique d'un polymère peut être catalysée par une base. Il est à la portée de l'homme du métier d'adapter les conditions du couplage chimique (température, pression, utilisation d'un catalyseur, durée de réaction) pour permettre la création de la liaison covalente.

Dans un autre exemple, les étapes d'hydrolyses de groupes alcoxysilane ou trialcoxysilane en groupes silanol susmentionnées lorsque le POSS porte au moins un groupe trialcoxysilane ou alcoxyle et/ou que le polymère comporte des groupes trialcoxysilane peuvent être catalysées par un acide. De même, l'étape de condensation entre le POSS et le polymère pour former une liaison siloxane peut être catalysée par un acide, voire par un acide et par la chaleur.

Lorsque le POSS n'a qu'un seul atome de silicium porteur d'un substituant R ou X susceptible de former une liaison covalente, un polymère comprenant un groupe fonctionnel modifié dont la masse moléculaire est augmentée est obtenu.

Lorsque le POSS a deux atomes de silicium porteurs d'un substituant R ou X susceptible de former une liaison covalente, le POSS peut réagir avec deux chaînes de polymère distinctes, ce qui permet d'augmenter la masse moléculaire du polymère obtenu.

Lorsque le POSS a plus de trois atomes de silicium porteurs d'un substituant R ou X susceptible de former une liaison covalente, le POSS peut réagir avec trois chaînes de polymère distinctes, ce qui permet d'augmenter la masse moléculaire du polymère obtenu et de créer des points de réticulation.

Plus le nombre d'atomes de silicium du POSS substitués par un substituant R ou X susceptible de former une liaison covalente est élevé, plus la masse moléculaire du polymère augmente. De préférence, des POSS comprenant au moins deux atomes de silicium substitués par un groupement susceptible de former une liaison covalente sont utilisés lors de l'étape a). De manière particulièrement préférée, des POSS comprenant au moins trois atomes de silicium substitués par un groupement susceptible de former une liaison covalente sont utilisés lors de l'étape a). Des POSS comprenant autant de substituants R et/ou X susceptible de former une liaison covalente que d'atomes de silicium peuvent être utilisés, lorsque chaque atome de silicium du POSS est porteur d'un groupement susceptible de former une liaison covalente. Généralement, des POSS comprenant moins de quatre atomes de silicium substitués par un(des) groupement(s) R et/ou X susceptible(s) de former une liaison covalente sont utilisés lors de l'étape a).

L'augmentation de la masse moléculaire et/ou du nombre de points de réticulation permet de diminuer la mobilité des chaînes de polymères les unes par rapport aux autres et ainsi d'obtenir un polymère ayant des propriétés thermomécaniques améliorées. Une conduite flexible sous marine comprenant un tel polymère est donc adaptée pour être utilisée pour le transport de fluides sous haute pression et haute température.

Dans un deuxième mode de réalisation du procédé, le(s)dit(s) groupement(s) R et/ou X susceptible(s) de former une liaison hydrogène est(sont) choisi(s) parmi -OH, - NH₂, -SH, -OR₁₇, une chaîne hydrocarbonée linéaire, ramifiée ou cyclique, saturée, insaturée ou aromatique, substituée par un ou plusieurs groupes choisis parmi un groupe -F, -COOR₁, -COR₁, -OR₁, -SR₁, -NR₁R₂, -NR₁COR₂, -COR₁NR₂, -NR₁-CO-NR₂R₃, -O-CO-NR₁, -NR₁-CO-OR₂, -CN, -NO₂ où R₁, R₂ et R₁₇ sont tels que définis ci-dessus, avec le polymère. Ainsi, lors de l'étape a), au moins une liaison hydrogène est formée entre le polymère et le POSS.

Les POSS de formule (I), (II), (III) et (VI) suivantes peuvent par exemple être mis en oeuvre lors de l'étape a) du deuxième mode de réalisation : 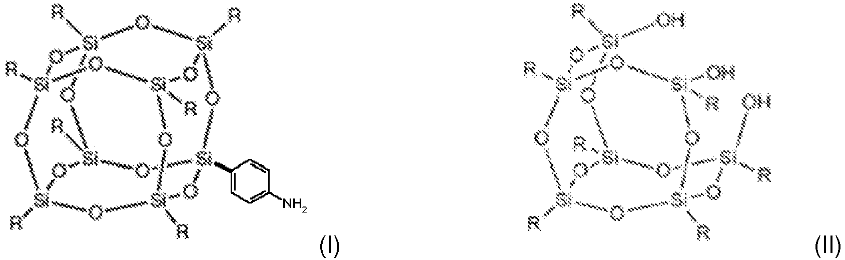 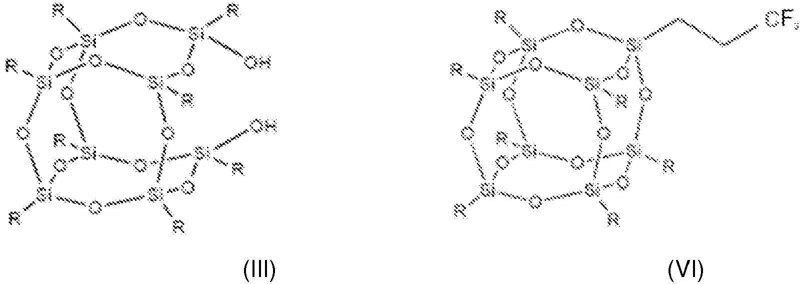 dans lesquelles R représente une chaîne hydrocarbonée linéaire, ramifiée ou cyclique, saturée, insaturée ou aromatique ou un groupement tel que défini pour R et/ou X dans le deuxième mode de réalisation du procédé.

De préférence, dans la formule (I) susmentionnée, R représente 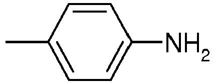 et dans les formules (II), (III) et (VI) susmentionnées, R représente un groupe isobutyle. Ces POSS sont avantageusement disponibles commercialement.

Ces POSS ont en effet au moins un des atomes de silicium substitué par un substituant porteur d'un groupement susceptible de former une liaison hydrogène, tel qu'illustré sur le schéma suivant :

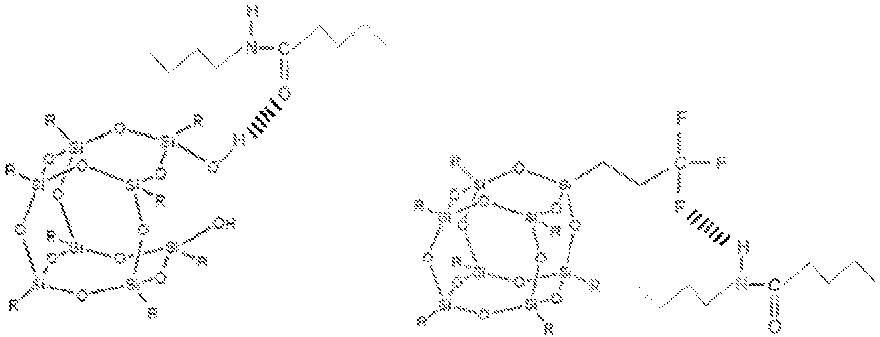

Là encore, des POSS dont au moins un des atomes de silicium est porteur d'un substituant R susceptible de former une liaison hydrogène avec un polymère, et en particulier porteur d'une des fonctions précitées, peuvent notamment être préparés en suivant les procédés décrits dans la demande internationale WO 01/10871.

Ce deuxième mode de réalisation est particulièrement adapté lorsque le polymère est un polyamide comportant éventuellement des chaînes latérales fonctionnelles.

Lorsqu'un polymère cristallin est mis en oeuvre pour réaliser l'étape a) du procédé, par exemple un polyamide 11, un polyamide 12 ou un polyamide 6.12, généralement la couche obtenue à la fin de l'étape b) a également un caractère cristallin. La présence de POSS dans la résine polymère n'affecte pas le caractère cristallin de la couche obtenue.

L'étape b) d'extrusion peut être réalisée par toute méthode connue de l'homme du métier.

Généralement, la résine obtenue à la fin de l'étape a) est séchée, typiquement dans une étuve à une température supérieure à 70°C, généralement pendant plusieurs heures, par exemple quatre heures à 80 °C, avant d'alimenter une extrudeuse mono-vis, bi-vis, une extrudeuse réactive (et dans ce cas les étapes a) et b) sont simultanées puisque le mélange entre le POSS et le polymère et l'extrusion se font dans le même outillage) ou une co-extrudeuse permettant de réaliser une couche comprenant une résine polymère comprenant au moins un POSS lié chimiquement au polymère.

La couche comprenant la résine obtenue à la fin de l'étape b) est typiquement tubulaire, a généralement un diamètre de 50 mm à 600 mm, de préférence de 50 à 400 mm, une épaisseur de 1 mm à 150 mm, préférentiellement de 40 à 100 mm et une longueur de 1 m à 10 km.

Le procédé comprend l'étape c) d'assemblage de la couche obtenue lors de l'étape b) avec au moins une autre couche pour former la conduite sous marine flexible, notamment avec une gaine polymérique externe, une nappe d'armure de traction, éventuellement une voûte de pression, et éventuellement une carcasse métallique.

Dans un mode de réalisation, l'extrusion du mélange obtenu à l'étape a) est réalisée sur une autre couche, typiquement la carcasse, pour obtenir un ensemble (carcasse / couche en résine polymère comprenant au moins un POSS lié chimiquement au polymère) qui sera alors rapporté et calandré avec au moins une autre couche lors de l'étape c), typiquement une voûte de pression, des nappes d'armures de traction et une gaine polymérique externe. Ce mode de réalisation permet notamment de réaliser des conduites flexibles à passage non lisse (« Rough bore » en anglais).

Dans un autre mode de réalisation, l'extrusion du mélange obtenu à l'étape a) est indépendante et la couche obtenue à la fin de l'étape b) est alors rapportée et calandrée avec au moins une autre couche lors de l'étape c), typiquement une voûte de pression, des nappes d'armures de traction et une gaine polymérique externe. Ce mode de réalisation permet notamment de réaliser des conduites flexibles à passage lisse

### (« Smooth bore » en anglais)

Les couches sont assemblées pour former une conduite flexible sous marine de type non lié ("unbonded" en langue anglaise), telle que décrite dans les documents normatifs publiés par l'American Petroleum Institute (API), API 17J et API RP 17B.

Selon un troisième objet, l'invention a pour objet une conduite flexible sous marine susceptible d'être obtenue par le procédé précité.

La présence de POSS lié chimiquement au polymère dans une résine polymère utilisée comme couche de la conduite flexible sous marine selon l'invention présente, en plus de l'amélioration des propriétés thermomécaniques de la résine, les avantages suivants :
- les propriétés thermomécaniques de la résine peuvent être adaptées en fonction du pourcentage de POSS introduit dans la résine et du POSS utilisé, plus particulièrement en fonction de la nature de R et/ou de X et donc de la nature de la liaison avec le polymère (liaison covalente ou hydrogène et nature de la liaison covalente (ester, amide, sulfonamide, ...)), du nombre de substituant R et/ou X du POSS capables de former une liaison chimique avec le polymère,
- la résine est homogène car les POSS sont miscibles dans les résines polymère grâce au choix des groupements R et X,
- la résine peut être obtenue en utilisant les dispositifs et les techniques classiques de mélange et d'extrusion,
- la structure cage comprenant des atomes de silicium et d'oxygène des POSS est stable chimiquement et dans le temps,
- la reprise d'eau de la résine est diminuée car les POSS rendent la résine plus hydrophobe,
- le gonflement de la résine est diminué,
- l'allongement à la rupture de la résine est augmenté tout en maintenant le module, la résistance à l'impact et la perméation.

Ces avantages permettent l'utilisation de la conduite flexible sous marine pour le transport de fluides. Ainsi, selon un quatrième objet, l'invention a pour objet l'utilisation de la conduite flexible sous marine précitée pour le transport de fluides, notamment de gaz ou de liquides, de préférence d'hydrocarbures.

D'autres particularités et avantages de l'invention ressortiront à la lecture de la description faite ci-après de modes de réalisation particuliers de l'invention, donnés à titre indicatif mais non limitatif, en référence à la figure.
La figure est une vue schématique partielle en perspective d'une conduite flexible selon l'invention.

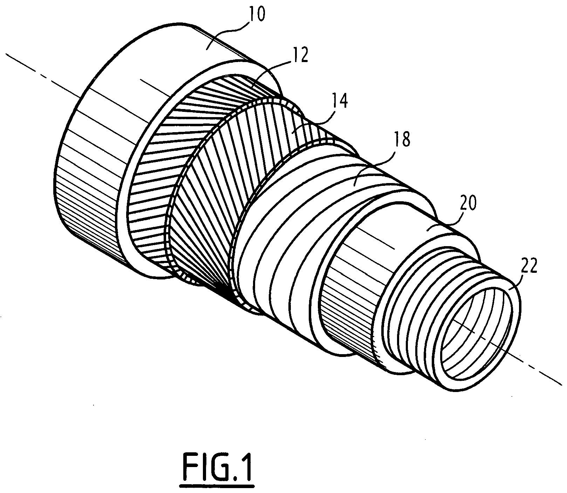

La Figure 1 illustre une conduite conforme à l'invention comprenant, de l'extérieur vers l'intérieur :
- une gaine polymérique externe dite d'étanchéité 10 (appelée gaine externe),
- une nappe externe d'armures de traction 12, une nappe interne d'armures de traction 14 enroulée en sens opposé de la nappe externe 12,
- une voûte de pression 18 de reprise des efforts radiaux générés par la pression du fluide transporté,
- une gaine polymérique interne dite d'étanchéité 20 comprenant une résine polymère comprenant au moins un POSS selon l'invention, et
- une carcasse interne 22 de reprise des efforts radiaux d'écrasement.

Du fait de la présence de la carcasse interne 22, cette conduite est dite à passage non lisse (" rough bore " en langue anglaise). L'invention pourrait aussi s'appliquer à une conduite dite à passage lisse (" smooth-bore " en langue anglaise), ne comportant pas de carcasse interne.

De même, on ne sortirait pas du champ de présente invention en supprimant la voûte de pression 18, sous réserve que les angles d'hélice des fils constituant les nappes d'armures 12, 14 soient proches de 55° et en sens opposé.

Les nappes d'armures 12, 14 sont obtenues par enroulement à pas long d'un ensemble de fils en matériau métallique ou composite, de section généralement sensiblement rectangulaire. L'invention s'appliquerait aussi si ces fils avaient une section de géométrie circulaire ou complexe, du type par exemple T autoagrafé. Sur la figure 1, seules deux nappes d'armures 12 et 14 sont représentées, mais la conduite pourrait aussi comporter une ou plusieurs paires supplémentaires d'armures. La nappe d'armures 12 est dite externe car elle est ici la dernière, en partant de l'intérieur de la conduite, avant la gaine d'étanchéité externe 10.

La conduite flexible peut également comprendre des couches non représentées sur la figure 1, telles que :
- une couche de maintien entre la gaine polymérique externe 10 et les nappes d'armures de traction 12 et 14, ou entre deux nappes d'armures de traction,
une ou plusieurs couches anti-usure (" anti-wear layer " en anglais) en matériau polymérique en contact soit avec la face interne de la couche de maintien précitée, soit avec sa face externe, soit avec les deux faces, cette couche anti-usure permettant d'éviter que la couche de maintien s'use au contact avec des armures métalliques. Les couches anti-usure, qui sont bien connues de l'homme du métier, sont généralement réalisées par enroulement hélicoïdal d'un ou plusieurs rubans obtenus par extrusion d'un matériau polymérique à base de polyamide, de polyoléfines, ou de PVDF (" polyvinylidene fluoride " en anglais). On pourra aussi se reporter au document WO2006/120320 qui décrit des couches anti-usure constituées de rubans en polysulfone (PSU), polyethersulfone (PES), polyphenylsulfone (PPSU), polyetherimide (PEI), polytétrafluoroéthylène (PTFE), polyétheréthercétone (PEEK) ou polysulfure de phénylène (PPS).

## Revendications

1. Conduite flexible sous marine destinée au transport de fluides, notamment d'hydrocarbures, comprenant au moins une couche comprenant une résine polymère comprenant au moins un silsesquioxane oligomérique polyédrique lié chimiquement au polymère.

2. Conduite flexible sous marine selon la revendication 1, dans laquelle le polymère et le au moins un silsesquioxane oligomérique polyédrique sont liés par liaison covalente.

3. Conduite flexible sous marine selon la revendication 1 ou 2, dans laquelle le polymère et le au moins un silsesquioxane oligomérique polyédrique sont liés par liaison de type ester, amide, amine, thioéther, éther, urée, imide, imine, sulfonamide, carbamate ou phosphate.

4. Conduite flexible sous marine selon l'une quelconque des revendications 1 à 3, dans laquelle le polymère et le silsesquioxane oligomérique polyédrique sont liés par liaison hydrogène.

5. Conduite flexible sous marine selon l'une quelconque des revendications 1 à 4, dans laquelle le polymère est un polyamide.

6. Conduite flexible sous marine selon l'une quelconque des revendications 1 à 5, comprenant en outre les couches suivantes :
- une gaine polymérique externe,
- au moins une nappe d'armure de traction,
- éventuellement une voûte de pression, et/ou
- éventuellement une carcasse métallique.

7. Procédé de préparation d'une conduite flexible sous marine selon l'une quelconque des revendications 1 à 6, comprenant les étapes suivantes :
a) formation d'une résine polymère comprenant au moins un silsesquioxane oligomérique polyédrique lié chimiquement au polymère comprenant le mélange d'un polymère et d'au moins un silsesquioxane oligomérique polyédrique dont au moins un des atomes de silicium est substitué par un groupement R et/ou X susceptible(s) de former une liaison hydrogène et/ou covalente avec un polymère,
b) extrusion du mélange obtenu à l'étape a) pour former une couche comprenant ladite résine,
c) assemblage de la couche obtenue à l'étape b) avec au moins une autre couche.

8. Procédé selon la revendication 7, dans lequel le(s)dit(s) groupement(s) R et/ou X est (sont) choisi(s) parmi un halogène, -OH, -NH₂, -SH, une chaîne hydrocarbonée linéaire, ramifiée ou cyclique, saturée, insaturée ou aromatique, substituée par un ou plusieurs groupes choisis parmi un halogène ou un groupe -COCI, -OCOCI, -SO₂Cl, - COOR₁,
-COR₁, -CR₁R₂Cl, -OR₁, -SR₁, -NR₁R₂, -NR₁COR₂, -COR₁NR₂, -NR₁-CO-NR₂R₃, -O-CO-NR₁, -NR₁-CO-OR₂, -CN, -NO₂, -NCO, 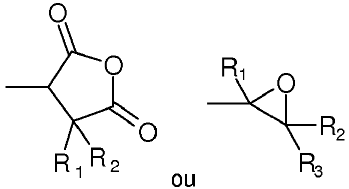 où R₁, R₂ et R₃ représentent indépendamment H ou une chaîne hydrocarbonée linéaire, ramifiée ou cyclique, saturée, insaturée ou aromatique, elle même éventuellement substituée par un ou plusieurs des groupes choisis parmi un halogène ou un groupe -COCI, -OCOCI, -COOR₄, -COR₄, -CR₄R₅Cl, -OR₄, -SR₄, -NR₄R₅, NR₄COR₅, -COR₄NR₅, -NR₄-CO-NR₅R₆, -O-CO-NR₄, -NR₄-CO-OR₅, -CN, -NO₂, -NCO, 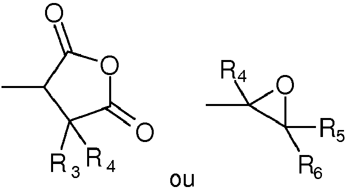 où R₄, R₅ et R₆ représentent indépendamment H ou une chaîne hydrocarbonée linéaire, ramifiée ou cyclique, saturée, insaturée ou aromatique.

9. Procédé selon la revendication 7 ou 8, dans lequel le(s)dit(s) groupement R et/ou X est(sont) susceptible(s) de former une liaison covalente et est(sont) choisi(s) parmi un halogène, -OH, -NH₂, -SH, une chaîne hydrocarbonée linéaire, ramifiée ou cyclique, saturée, insaturée ou aromatique, substituée par un ou plusieurs groupes choisis parmi un halogène ou un groupe -COCI, -OCOCI, -SO₂Cl, -CR₁R₂Cl, -COOH,-OH, -SH, -NR₁H, -CN, -NCO, 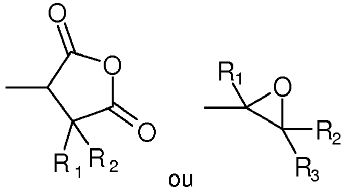 où R₁, R₂ et R₃ sont tels que définis à la revendication 8.

10. Procédé selon l'une quelconque des revendications 7 à 9, dans lequel un des silsesquioxane oligomérique polyédrique de formules (I), (II), (III), (IV) ou (V) suivantes est mis en oeuvre lors de l'étape a) : 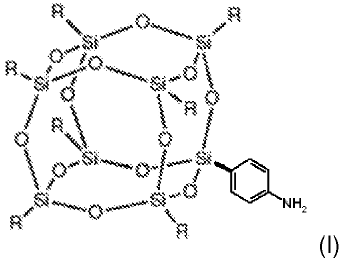 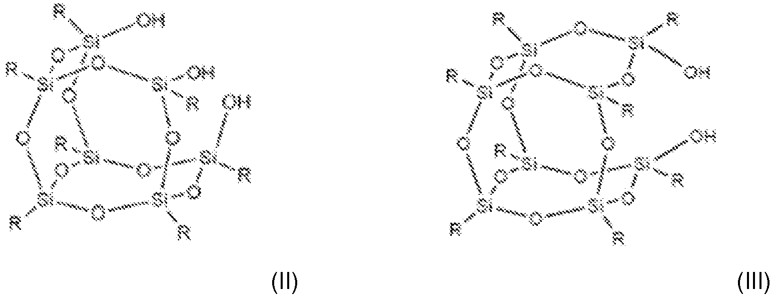 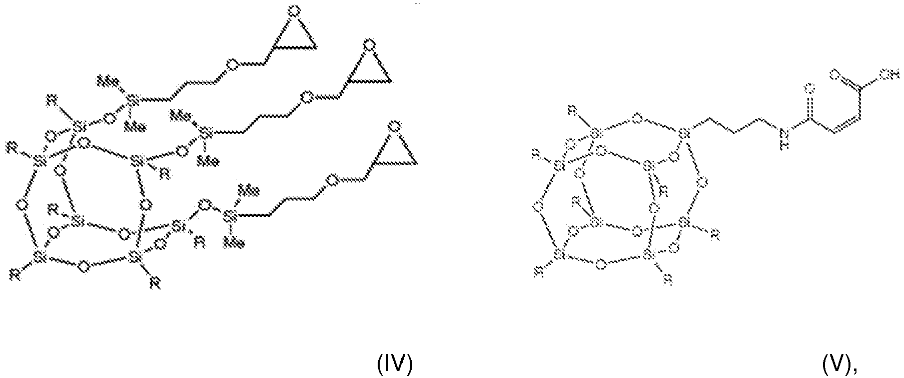 dans lesquelles R représente une chaîne hydrocarbonée linéaire, ramifiée ou cyclique, saturée, insaturée ou aromatique ou un groupement tel que défini dans la revendication 8.

11. Procédé selon la revendication selon l'une quelconque des revendications 7 à 10, comprenant une étape de couplage chimique pour former une liaison covalente entre ledit groupement et les fonctions d'un polymère.

12. Procédé selon la revendication 11, dans lequel le couplage chimique est catalysé par la chaleur, des radiations ou un catalyseur.

13. Procédé selon l'une quelconque des revendications 7 à 12, dans lequel le(s)dit(s) groupement R et/ou X est(sont) susceptible(s) de former une liaison hydrogène et est(sont) choisi(s) parmi -OH, -NH₂, -SH, une chaîne hydrocarbonée linéaire, ramifiée ou cyclique, saturée, insaturée ou aromatique, substituée par un ou plusieurs groupes choisis parmi un groupe -F, -COOR₁, -COR₁, -OR₁, -SR₁, -NR₁R₂, -NR₁COR₂, -COR₁NR₂, -NR₁-CO-NR₂R₃, -O-CO-NR₁, -NR₁-CO-OR₂, -CN, -NO₂ où R₁ et R₂ sont tels que définis à la revendication 8.

14. Procédé selon la revendication 13, dans lequel un des silsesquioxane oligomérique polyédrique de formules (I), (II), (III) et (VI) suivantes est mis en oeuvre lors de l'étape a) : 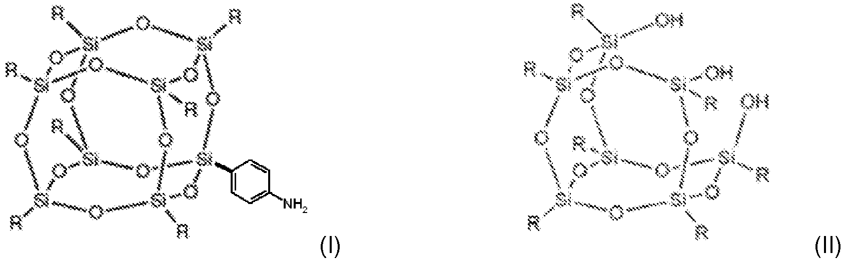 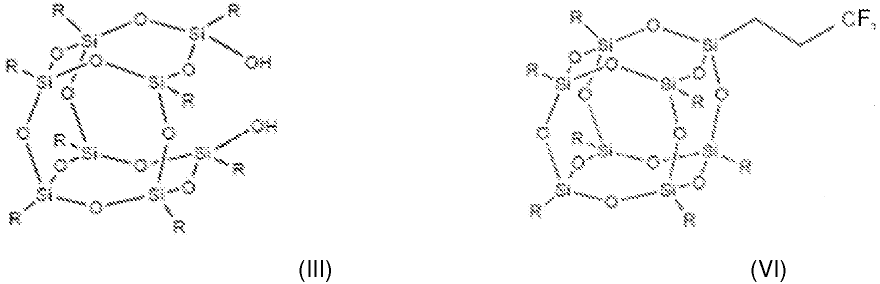 dans lesquelles R représente une chaîne hydrocarbonée linéaire, ramifiée ou cyclique, saturée, insaturée ou aromatique ou un groupement tel que défini dans la revendication 8.

15. Conduite flexible sous marine susceptible d'être obtenue par un procédé selon l'une quelconque des revendications 7 à 14.

16. Utilisation d'une conduite flexible sous marine selon l'une quelconque des revendications 1 à 6 pour le transport de fluides, notamment de gaz ou de liquides, de préférence d'hydrocarbures.

## Patentansprüche

1. Flexible Unterwasserleitung für den Transport von Fluiden, insbesondere von Kohlenwasserstoffen, umfassend mindestens eine Schicht umfassend ein Polymerharz umfassend mindestens ein polyedrisches, oligomeres Silsesquioxan, das chemisch an das Polymer gebunden ist.

2. Die flexible Unterwasserleitung gemäß Anspruch 1. Wobei das Polymer und das mindestens eine polyedrische, oligomere Silsesquioxan durch eine kovalente Bindung verbunden sind.

3. Die flexible Unterwasserleitung gemäß Anspruch 1 oder 2, wobei das Polymer und das mindestens eine polyedrische, oligomere Silsesquioxan durch eine Ester-, Amid-, Amin-, Thioether-, Ether-, Hamstoff-, Imid-, Imin-, Sulfonamid-, Carbamat- oder Phosphatbindung verbunden sind.

4. Die flexible Unterwasserleitung gemäß einem der Ansprüche 1 bis 3, wobei das Polymer und das polyedrische, oligomere Silsesquioxan durch eine Wasserstoffbrückenbindung verbunden sind.

5. Die flexible Unterwasserleitung gemäß einem der Ansprüche 1 bis 4, wobei das Polymer ein Polyamid ist.

6. Die flexible Unterwasserleitung gemäß einem der Ansprüche 1 bis 5, umfassend des Weiteren die folgenden Schichten:
- eine äußere Polymerhülle,
- mindestens einen Zugpanzerungsmantel,
- gegebenenfalls ein Druckgewölbe, und/oder
- gegebenenfalls ein Metallgehäuse.

7. Verfahren zur Herstellung einer flexiblen Unterwasserleitung gemäß einem der Ansprüche 1 bis 6, umfassend die folgenden Schritte:
a) Bildung eines Polymerharzes umfassend mindestens ein polyedrisches, oligomeres Silsesquioxan, das chemisch an das Polymer gebunden ist, umfassend die Vermischung eines Polymers und mindestens eines polyedrischen, oligomeren Silsesquioxans, wobei mindestens ein Siliciumatom davon mit einer Gruppe R und/oder X substituiert ist, welche geeignet ist/sind, eine Wasserstoffbrückenbindung und/oder eine kovalente Bindung mit einem Polymer zu bilden,
b) Extrusion der in Schritt a) erhaltenen Mischung, um eine Schicht umfassend das Harz zu bilden,
c) Assemblierung der in Schritt b) erhaltenen Schicht mit mindestens einer anderen Schicht.

8. Verfahren gemäß Anspruch 7, wobei die Gruppe(n) R und/oder X ausgewählt ist/sind aus einem Halogen, -OH, -NH₂, -SH, einer linearen, verzweigten oder cyclischen, gesättigten, ungesättigten oder aromatischen Kohlenwasserstoffkette, substituiert mit einer oder mehreren Gruppen ausgewählt aus einem Halogen oder einer -COCl, -OCOCl, -SO₂Cl, -COOR₁, -COR₁, -CR₁R₂Cl, -OR₁, -SR₁, -NR₁R₂,-NR₁COR₂, -COR₁NR₂, -NR₁-CO-NR₂R₃, -O-CO-NR₁, -NR₁-CO-OR₂, -CN, -NO₂, -NCO, 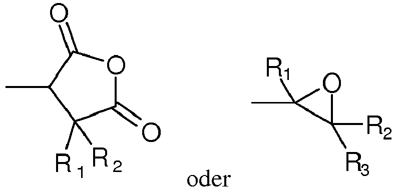 Gruppe, wobei R₁, R₂ und R₃ unabhängig H oder eine lineare, verzweigte oder cyclische, gesättigte, ungesättigte oder aromatische Kohlenwasserstoffkette darstellen, welche selbst gegebenenfalls substituiert ist mit einer oder mehreren Gruppen ausgewählt aus einem Halogen oder einer -COCl, -OCOCl, -COOR₄, -COR₄, -CR₄R₅Cl, -OR₄, -SR₄, -NR₄R₅, NR₄COR₅, -COR₄NR₅, -NR₄-CO-NR₅R₆, -O-CO-NR₄, -NR₄-CO-OR₅, -CN, -NO₂, -NCO, 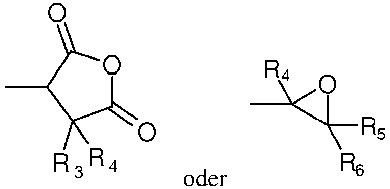 Gruppe, wobei R₄, R₅ und R₆ unabhängig H oder eine lineare, verzweigte oder cyclische, gesättigte, ungesättigte oder aromatische Kohlenwasserstoffkette darstellen.

9. Verfahren gemäß Anspruch 7 oder 8, wobei die Gruppe(n) R und/oder X geeignet ist/sind, eine kovalente Bindung zu bilden, und ausgewählt ist/sind aus einem Halogen, -OH, -NH₂, -SH, einer linearen, verzweigten oder cyclischen, gesättigten, ungesättigten oder aromatischen Kohlenwasserstoffkette, substituiert mit einer oder mehreren Gruppen ausgewählt aus einem Halogen oder einer -COCl, -OCOCl,-SO₂Cl, -CR₁R₂Cl, -COOH, -OH, -SH, -NR₁H, -CN, -NCO, 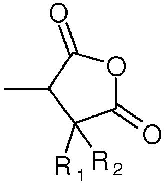 oder 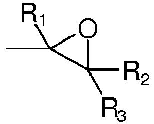 Gruppe, wobei R₁, R₂ und R₃ wie in Anspruch 8 definiert sind.

10. Verfahren gemäß einem der Ansprüche 7 bis 9, wobei eines der polyedrischen, oligomeren Silsesquioxane der folgenden Formeln (I), (II), (III), (IV) oder (V) in Schritt a) verwendet wird: 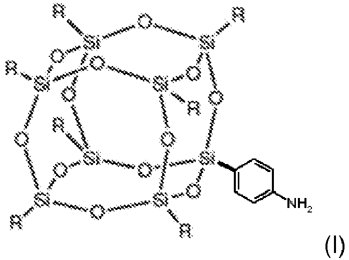 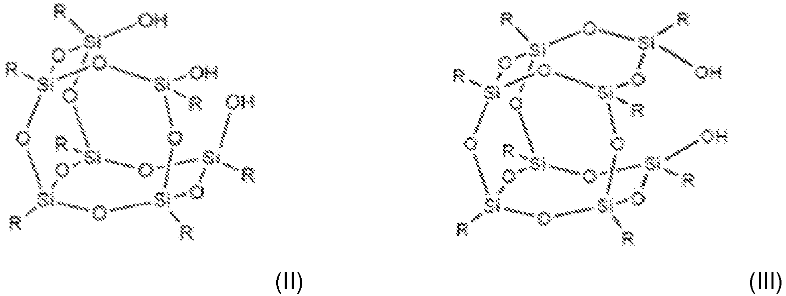 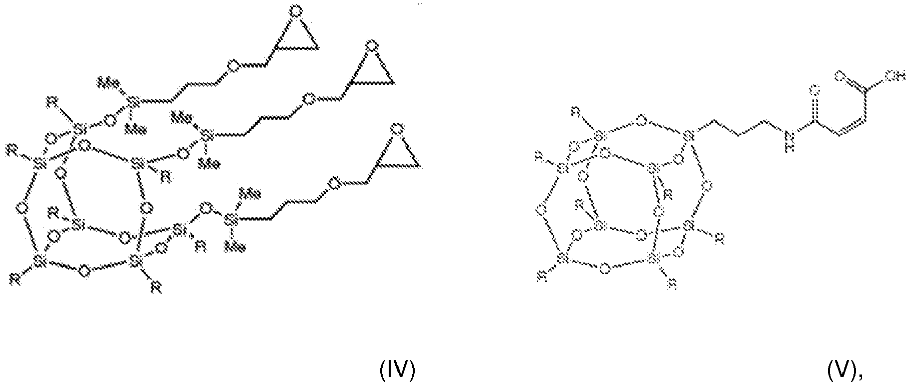 in denen R eine lineare, verzweigte oder cyclische, gesättigte, ungesättigte oder aromatische Kohlenwasserstoffkette oder eine Gruppe wie in Anspruch 8 definiert darstellt.

11. Verfahren gemäß einem der Ansprüche 7 bis 10, umfassend einen Schritt der chemischen Kupplung, um eine kovalente Bindung zwischen der Gruppe und den Funktionalitäten eines Polymers zu bilden.

12. Verfahren gemäß Anspruch 11, wobei die chemische Kupplung durch Wärme, Strahlungen oder einen Katalysator katalysiert wird.

13. Verfahren gemäß einem der Ansprüche 7 bis 12, wobei die Gruppe(n) R und/oder X geeignet ist/sind, eine Wasserstoffbrückenbindung zu bilden, und ausgewählt ist/sind aus -OH, -NH₂, -SH, einer linearen, verzweigten oder cyclischen, gesättigten, ungesättigten oder aromatischen Kohlenwasserstoffkette, substituiert mit einer oder mehreren Gruppen ausgewählt aus einer -F, -COOR₁, -COR₁, -OR₁, -SR₁, -NR₁R₂, -NR₁COR₂, -COR₁NR₂, -NR₁-CO-NR₂R₃, -O-CO-NR₁, -NR₁-CO-OR₂, -CN, -NO₂ Gruppe, wobei R₁ und R₂ wie in Anspruch 8 definiert sind.

14. Verfahren gemäß Anspruch 13, wobei eines der polyedrischen, oligomeren Silsesquioxane der folgenden Formeln (I), (II), (III) und (VI) in Schritt a) verwendet wird: 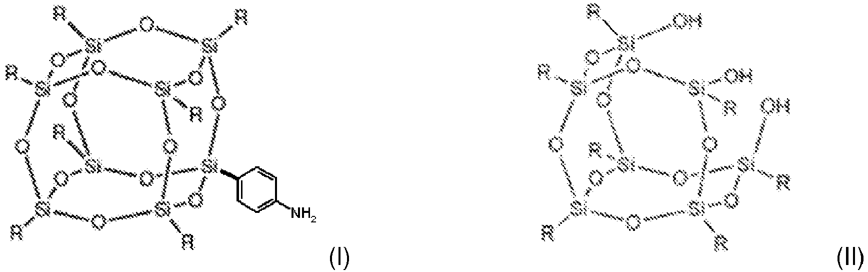 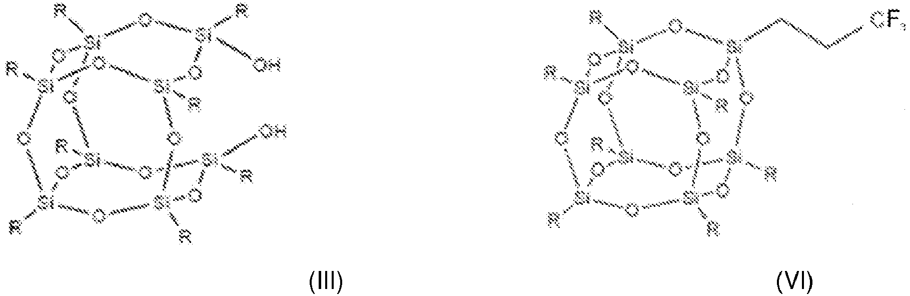 in denen R eine lineare, verzweigte oder cyclische, gesättigte, ungesättigte oder aromatische Kohlenwasserstoffkette oder eine Gruppe wie in Anspruch 8 definiert darstellt.

15. Flexible Unterwasserleitung, welche durch ein Verfahren gemäß einem der Ansprüche 7 bis 14 erhalten werden kann.

16. Verwendung einer flexiblen Unterwasserleitung gemäß einem der Ansprüche 1 bis 6 für den Transport von Fluiden, insbesondere von Gas oder von Flüssigkeiten, vorzugsweise von Kohlenwasserstoffen.

## Claims

1. Flexible underwater pipe intended for transporting fluids, notably hydrocarbons, comprising at least one layer comprising a polymeric resin comprising at least one polyhedral oligomeric silsesquioxane chemically bound to the polymer.

2. Flexible underwater pipe according to claim 1, wherein the polymer and said at least one polyhedral oligomeric silsesquioxane are bound through a covalent bond.

3. Flexible underwater pipe according to claim 1 or 2, wherein the polymer and said at least one polyhedral oligomeric silsesquioxane are bound through a bond of the ester, amide, amine, thioether, ether, urea, imide, imine, sulfonamide, carbamate or phosphate type.

4. Flexible underwater pipe according to any of claims 1 to 3, wherein the polymer and the polyhedral oligomeric silsesquioxane are bound through a hydrogen bond.

5. Flexible underwater pipe according to any of claims 1 to 4, wherein the polymer is a polyamide.

6. Flexible underwater pipe according to any of claims 1 to 5, further comprising the following layers:
- an external polymeric sheath,
- at least one tensile armor ply,
- optionally a pressure vault, and/or
- optionally a metal carcass.

7. Method for preparing a flexible underwater pipe according to any of claims 1 to 6, comprising the following steps:
a) forming a polymeric resin comprising at least one polyhedral oligomeric silsesquioxane chemically bound to the polymer, comprising the mixing of a polymer and of at least one polyhedral oligomeric silsesquioxane, for which at least one of the silicon atoms is substituted with a group R and/or X capable of forming a hydrogen and/or covalent bond with a polymer,
b) extruding the mixture obtained in step a) in order to form a layer comprising said resin,
c) assembling the layer obtained in step b) with at least one other layer.

8. Method according to claim 7, wherein said group(s) R and/or X is(are) selected from a halogen, -OH, -NH₂, -SH, a saturated, unsaturated or aromatic, linear, branched or cyclic hydrocarbon chain, substituted with one or several groups selected from a halogen or a group COCI, -OCOCI, -SO₂Cl, -COOR₁, -COR₁, -CR₁R₂Cl, -OR₁, -SR₁, -NR₁R₂, -NR₁COR₂, -COR₁NR₂, -NR₁-CO-NR₂R₃, -O-CO-NR₁, -NR₁-CO-OR₂, -CN, -NO₂, -NCO, 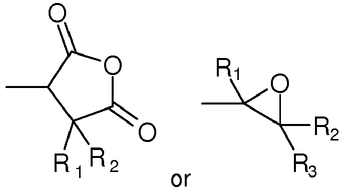 wherein R₁, R₂ and R₃ represent independently H or a saturated, unsaturated or aromatic, linear, branched or cyclic hydrocarbon chain, itself optionally substituted with one or several of the groups selected from a halogen or a group -COCl, -OCOCI, -COOR₄, -COR₄, -CR₄R₅Cl, -OR₄, -SR₄, -NR₄R₅, NR₄COR₅, -COR₄NR₅, -NR₄-CO-NR₅R₆, -O-CO-NR₄, -NR₄-CO-OR₅, -CN, -NO₂, -NCO, 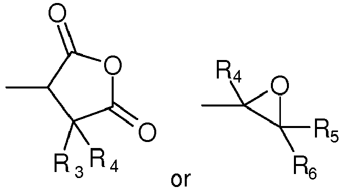 wherein R₄, R₅ and R₆ represent independently H or a saturated, unsaturated or aromatic, linear, branched or cyclic hydrocarbon chain.

9. Method according to claim 7 or 8, wherein said group(s) R and/or X is(are) capable of forming a covalent bond and is(are) selected from a halogen, -OH, -NH₂, -SH, a saturated, unsaturated or aromatic, linear, branched or cyclic hydrocarbon chain, substituted with one or several groups selected from a halogen or a group -COCl, -OCOCl, -SO₂Cl, -CR₁R₂Cl, -COOH, -OH, -SH, -NR₁H, -CN, -NCO, 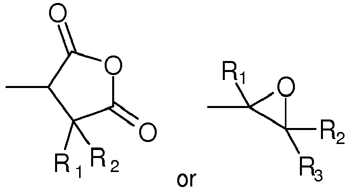 wherein R₁, R₂ and R₃ are as defined in claim 8.

10. The method according to any of claims 7 to 9, wherein one of the polyhedral oligomeric silsesquioxanes of following formulae (I), (II), (III), (IV) or (V) is applied during step a): 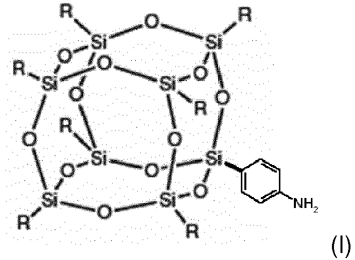 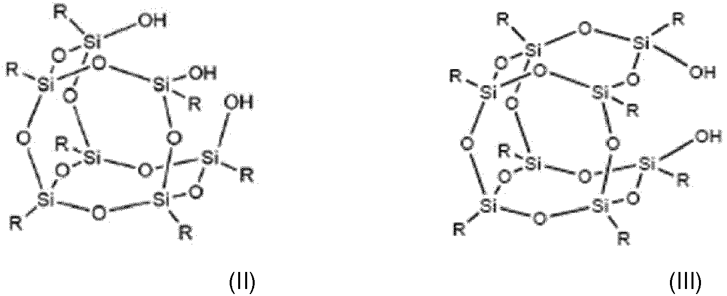 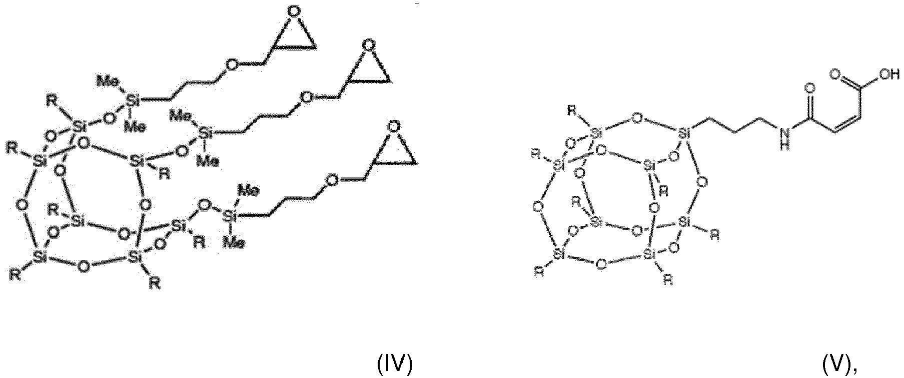 wherein R represents a saturated, unsaturated or aromatic, linear, branched or cyclic hydrocarbon chain or a group as defined in claim 8.

11. Method according to any of claims 7 to 10, comprising a chemical coupling step for forming a covalent bond between said group and the functions of a polymer.

12. Method according to claim 11,wherein the chemical coupling is catalyzed by heat, radiations or a catalyst.

13. Method according to any of claims 7 to 12, wherein said groups R and/or X is(are) capable of forming a hydrogen bond and is(are) selected from -OH, -NH₂, -SH, a saturated, unsaturated or aromatic, linear, branched or cyclic hydrocarbon chain, substituted with one or several groups selected from a group -F, -COOR₁, -COR₁, -OR₁, -SR₁, -NR₁R₂, -NR₁COR₂, -COR₁NR₂, -NR₁-CO-NR₂R₃, -O-CO-NR₁, -NR₁-CO-OR₂, -CN, -NO₂ wherein R₁ and R₂ are as defined in claim 8.

14. Method according to claim 13, wherein one of the polyhedral oligomeric silsesquioxanes are the following formulae (I), (II), (III) and (VI) is applied during step a): 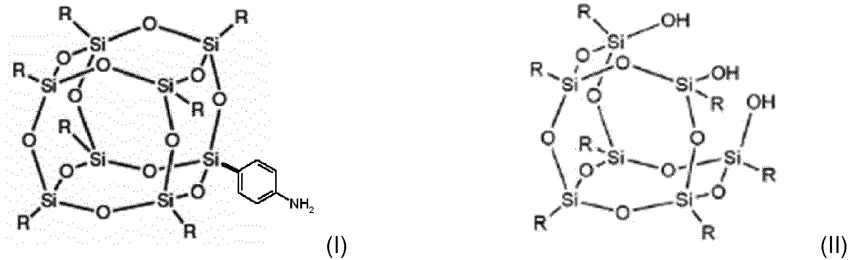 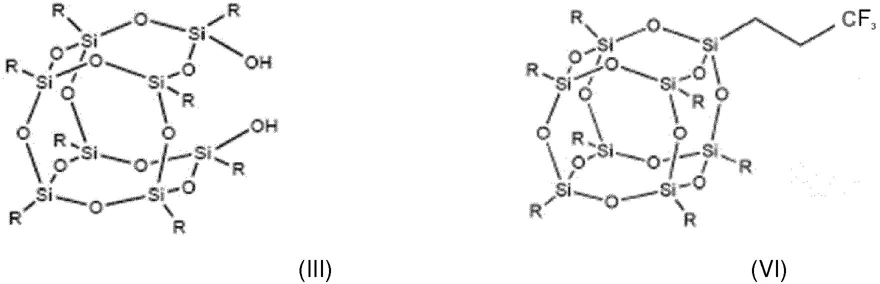 wherein R represents a saturated, unsaturated or aromatic, linear, branched or cyclic hydrocarbon chain or a group as defined in claim 8.

15. Flexible underwater pipe which may be obtained by a method according to any of claims 7 to 14.

16. Use of a flexible underwater pipe according to any of claims 1 to 6 for transporting fluids, notably gases or liquids, preferably hydrocarbons.
